Europäisches Patentamt

European Patent Office

Office européen des brevets

(11) Publication number: **0 320 799**
**A2**

## EUROPEAN PATENT APPLICATION

(21) Application number: 88120524.9

(51) Int. Cl.4: **B29C 45/14 , A43B 3/10**

(22) Date of filing: 08.12.88

(30) Priority: 11.12.87 IT 2297487

(43) Date of publication of application:
21.06.89 Bulletin 89/25

(84) Designated Contracting States:
AT BE CH DE ES FR GB GR IT LI NL SE

(71) Applicant: I.G.A. S.r.l. DIVISIONE MARE E SPORT
Via Sicilia 130
I-20052 Monza (Province of Milano)(IT)

(72) Inventor: Geminiani, Giovanni
Via M. D'Azeglio, 2
I-20052 Monza(IT)

(74) Representative: Modiano, Guido et al
·MODIANO, JOSIF, PISANTY & STAUB
Modiano & Associati Via Meravigli, 16
I-20123 Milan(IT)

(54) Process for manufacturing footwear such as slippers, and slipper obtained with the process.

(57) The process consists in die-cutting a two-part element (1) in synthetic plastic material to produce the upper, in perforating the upper at least in its region of coupling to the sole, reducing the useful thickness of the two-part element with a depression (8) at least on its outer surface in the portion surrounding each hole (7), in positioning the upper in a mold to produce the sole, in injecting plastic material to produce the sole, rigidly associating with said sole at least the lateral portions of the upper, the injected plastic material passing in each hole and filling the related depression.

Fig.8

EP 0 320 799 A2

# PROCESS FOR MANUFACTURING FOOTWEAR SUCH AS SLIPPERS, AND SLIPPER OBTAINED WITH THE PROCESS

The present invention relates to a process for manufacturing footwear such as slippers.

As is known, slippers are currently commercially available which are obtained by employing a sole in foamed plastic material to which an upper is connected, said upper consisting of a transverse band comprising a two-part element constituted by a layer of plastic material with which an inner felt is coupled.

In the solutions of the known art, said band or upper is coupled to the sole by glueing it laterally to said sole, substantially at the sole of the foot, or possibly by connecting it with welds or similar methods.

In other words, a sole molding step and a subsequent upper coupling step are performed in order to obtain the slipper.

This method leads to some disadvantages, since besides entailing relatively long production times the coupling between the sole and the band is relatively weak and is frequently subject to tears or breakage.

The aim of the invention is indeed to eliminate the previously described disadvantages by providing a process, for manufacturing footwear such as slippers, to obtain a new product which, besides having improved structural characteristics, considerably simplifies all its manufacturing steps.

Within the scope of the above described aim, a particular object of the invention is to provide a process for obtaining a finished product, with no further processing, the trimmings whereof are particularly precise, thus contributing to a considerable increase in the value of the slipper.

A further object of the present invention is to provide a process which, by virtue of the peculiar characteristics of its execution, is capable of giving the greatest assurances of reliability and safety in use.

Not least object of the present invention is to provide a slipper which is easily obtainable starting from commonly commercially available elements and materials and is furthermore competitive from a merely economical point of view.

The above described aim, as well as the objects mentioned and others which will become apparent hereinafter, are achieved by a process for manufacturing footwear such as slippers, according to the invention, characterized in that it consists in die-cutting a two-part element in synthetic material to produce the upper, in perforating said upper at least in the region of its coupling with the sole, reducing the useful thickness of the two-part element with a depression at least on its outer surface in the portion surrounding each hole, in positioning the upper in a mold for producing the sole, in injecting plastic material to produce the sole, rigidly associating with said sole at least the lateral portions of said upper, the injected material passing in each hole and filling its related depression.

Further characteristics and advantages of the invention will become apparent from the description of a preferred but not exclusive embodiment of the process for manufacturing footwear such as slippers, as well as of the slipper thus obtained and of the mold used, illustrated only by way of non-limitative example in the accompanying drawings, wherein:

figure 1 is a schematic perspective view of one configuration of the obtainable slipper;

figure 2 is top a plan view of the die-cut element for obtaining the upper;

figure 3 is an enlarged-scale detail view of the perforation provided on the upper in its region of coupling to the sole;

figure 4 is a sectional view of the detail of figure 3;

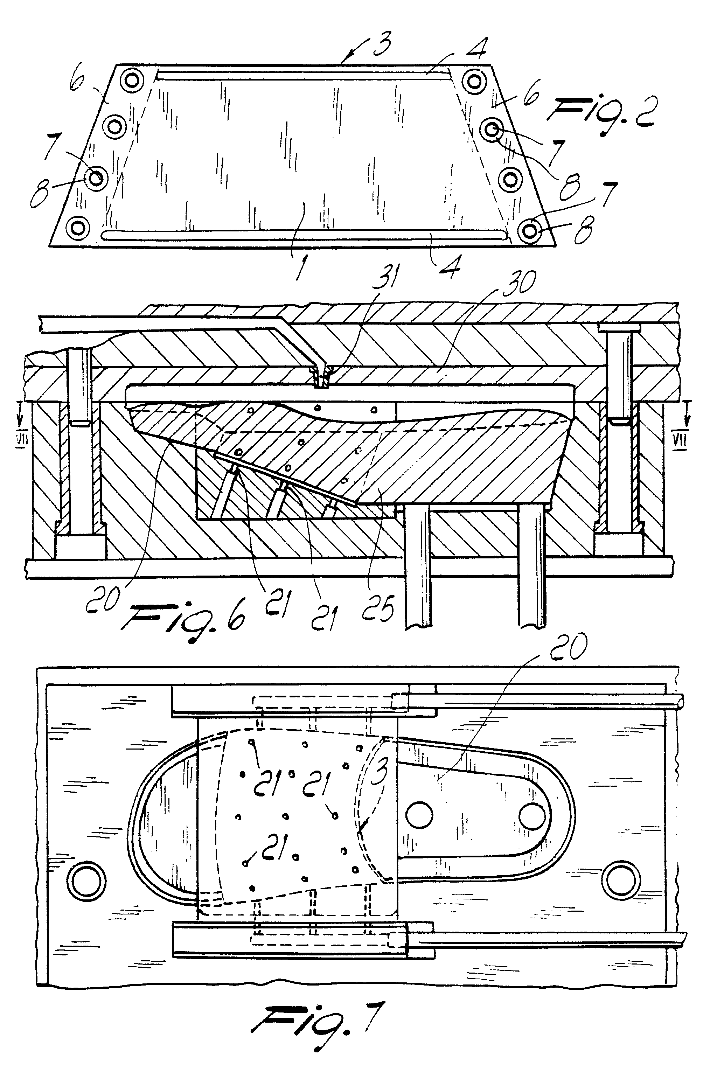

figure 5 is a transverse sectional view of the mold employed;

figure 6 is a longitudinal sectional view of the mold;

figure 7 is a view of the mold taken along the line VII-VII of figure 6;

figure 8 is a detail sectional view taken at the coupling region between the upper and the sole.

With reference to the above described figures, the process for manufacturing footwear such as slippers, according to the invention, consists of die-cutting a two-part element obtained from a polyvinylchloride layer or sheet 1 coupled with a felt 2, on one face and preferably on its inner face. The surface of the felt 2 is treated to make it compact and non-toxic.

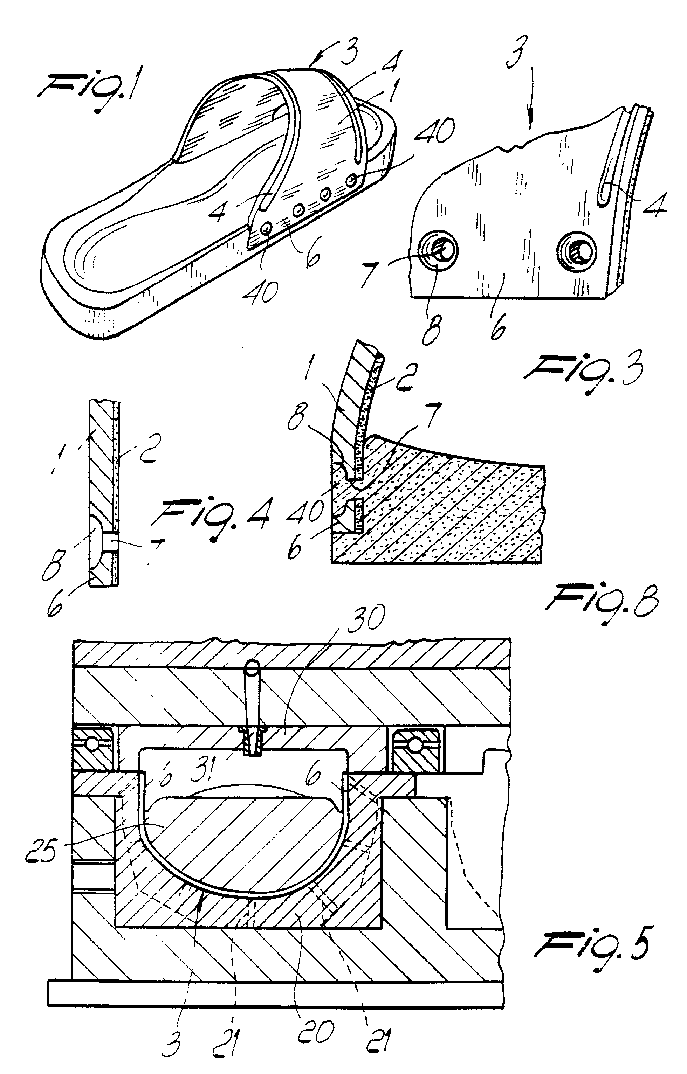

The die-cut element 3 thus obtained has a substantially band-like configuration, illustrated in figure 3, and has connecting lines 4 at its longitudinal edges; the thickness of the two-part element is reduced at said lines.

Through holes 7 are furthermore provided at the lateral flaps 6 for coupling to the sole and are surrounded by a depressed region obtained by reducing the useful thickness of the two-part element by high-frequency die-cutting or similar methods, so as to create a depression 8 on the outer face of the upper 3.

The upper 3 thus produced is placed in a counter-mold 20 which defines means for retaining said upper. Said means are advantageously obtained by means of a plurality of small channels 21 connected to a source of negative pressure which keeps the upper 3 firmly in place.

A filler core 25 is accommodated inside the upper and inside the counter-mold 20 and affects the upper, delimiting the sole molding region by co-operating with a forming mold 30.

At least the lateral portion 6 of the upper protrudes in said sole molding region, so that said upper is affected, on its inner face, by the injection of foamed plastic material, generally foamed polyvinylchloride, which due to its chemical compatibility also rigidly associates with the upper, which consequently integrates with the sole.

The injector 31 is arranged in a middle portion of the region affected by the lateral flaps of the upper, so that during the injection step the material generates a thrust which in practice keeps the lateral flaps of the upper adherent to the walls; said flaps are affected by the plastic material only on their inner face and not on their outer face.

Part of the plastic material passes through the holes 7 and fills the depressions 8, creating in practice coupling elements with an enlarged head, indicated by the reference numeral 40 in figures 1 and 8, which provide a further element of coupling between the upper and the sole, together with the coupling determined by the association of the plastic material which is molded directly onto the sole.

This method produces a slipper in which the upper or band is directly integrated with the sole and does not require successive coupling operations as currently occurs, and furthermore has the great advantage that said coupling can withstand even relatively high mechanical stresses.

The holes furthermore create further coupling elements which increase the coupling force between the upper and the sole.

From what has been described it is thus apparent that the invention achieves the intended aim and objects, and in particular the fact is stressed that the provision of a mold allowing to inject the plastic material directly onto the band-like upper allows to simplify all the manufacturing operations, obtaining a product in which the positioning of the band is always extremely safe and precise, since said band is retained by negative pressure inside the counter-mold.

The invention thus conceived is susceptible to numerous modifications and variations, all of which are within the scope of the inventive concept.

Furthermore, all the details may be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Process for manufacturing footwear such as slippers, characterized in that it consists in die-cutting a two-part element (1) in synthetic material to produce the upper (3), in perforating said upper at least in its region of coupling to the sole, reducing the useful thickness of the two-part element with a depression (8) at least on its outer surface in the portion surrounding each hole (7), in positioning said upper (3) in a mold (30) for manufacturing the sole, in injecting plastic material to produce the sole, rigidly associating with said sole at least the lateral portions of said upper, the injected plastic material passing in each hole and filling its related depression.

2. Process according to claim 1, characterized in that the die-cutting and perforation of the upper are obtained using high frequencies.

3. Process according to the preceding claims, characterized in that the foamed plastic material constituting the sole is injected in a middle portion of the region affected by the lateral flaps (6) of said upper.

4. Process according to one or more of the preceding claims, characterized in that the inner surface of said upper is chemically compatible with the foamed plastic material employed.

5. Mold for manufacturing slippers, characterized in that it comprises a counter-mold (20) defining upper retention means (21), a filler core (25) accommodatable in said counter-mold within the region affected by said upper, and a mold (30) for shaping the sole, defining the cavity for inserting the plastic material, connected with a plastic material injector (31).

6. Mold according to the preceding claim, characterized in that said upper retention means are constituted by a plurality of small channels (21) leading into said counter-mold in the region affected by said upper and connected to a source of vacuum.

7. Mold according to the preceding claims, characterized in that the lateral flaps (6) of said upper (3) insert at least partially in said filling cavity affected by the injection of plastic material.

8. Mold according to one or more of the preceding claims, characterized in that the plastic material injector (31) is arranged in a middle portion of the region affected by said upper.

9. Slipper comprising a sole in foamed plastic material and a transverse band constituting the upper (3), characterized in that said upper has, at least at its region of coupling with said sole, holes (7) with a depressed region (8) on its outer face, said depressed region being filled by the plastic material which constitutes said sole.

10. Slipper, according to the preceding claim, characterized in that said upper is composed of a two-part element having a polyvinylchloride layer with an inner felt layer (2) the surface whereof is treated to make it compact and non-toxic.

Fig.1

Fig.3

Fig.4

Fig.8

Fig.5

Fig.2

Fig.6

Fig.7